# DEMANDE DE BREVET EUROPEEN

(11) **EP 0 894 522 A1**
(43) Date de publication de la demande: **03.02.1999**
(21) Numéro de dépôt: 98401921.6
(22) Date de dépôt: 28.07.1998
(51) Int. Cl.: B01D 53/22, C01B 21/04, C01B 23/00

(54) **Procédé et dispositif pour la production de gaz inerte ultra-pur**

(30) Priorité: 31.07.1997 FR 9709807
(71) Demandeur: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Gary, Daniel, 78180 Montigny le Bretonneux (FR); Lardeau, René, 91160 Saulx les Chartreux (FR); Thonnelier, Jean-Yves, 78960 Voisins le Bretonneux (FR)
(74) Mandataire: Conan, Philippe Claude

(57) **Abrégé**

L'invention concerne un dispositif et un procédé de préparation d'un gaz inerte de haute pureté à partir d'air comprenant les étapes successives de :
a) distillation cryogénique d'air comprimé,
b) récupération d'un fluide inerte impur contenant des impuretés hydrogène (H₂) et des impuretés résiduaires,
c) adsorption d'au moins une partie des impuretés résiduaires contenues dans ledit fluide inerte impur au moyen d'au moins un lit d'au moins un adsorbant,
d) récupération d'un fluide inerte intermédiaire contenant des impuretés hydrogène,
e) élimination par perméation des impuretés hydrogène contenues dans ledit fluide inerte intermédiaire,
f) récupération d'un fluide inerte de haute pureté à l'état gazeux.

## Description

La présente invention se rapporte au domaine de la production de gaz inertes de haute pureté à partir d'air.

Les gaz inertes de haute pureté trouvent des applications dans de nombreux secteurs de l'industrie et, en particulier dans le secteur de l'électronique et ce, à l'état liquide ou gazeux.

Habituellement, la production de fluides inertes de haute pureté, tels l'azote ou l'argon, est réalisé par distillation cryogénique de l'air ambiant de manière à produire un fluide inerte de pureté variable, et purification subséquente dudit fluide inerte afin d'en éliminer les impuretés résiduelles, tels l'hydrogène (H₂), le monoxyde de carbone (CO) et les traces d'oxygène (O₂), et d'obtenir ainsi un fluide inerte de haute pureté, c'est-à-dire contenant moins de quelques ppb (partie par milliard en volume) d'impuretés.

Habituellement, la purification subséquente du fluide inerte produit par distillation cryogénique est réalisée par adsorption des impuretés résiduelles sur des matériaux adsorbants de nature variée, tels les getters, les zéolites et les oxydes métalliques poreux.

En outre, il est également connu de soumettre l'air à distiller à un pré-traitement, avant de lui faire subir la distillation cryogénique susmentionnée.

En général, le prétraitement de l'air est réalisé par oxydation catalytique de certaines des impuretés oxydables contenues dans l'air, tels le monoxyde de carbone (CO) et l'hydrogène (H₂), de sorte de convertir ces espèces oxydables en dioxyde de carbone (CO₂) et en eau (H₂O); le dioxyde de carbone et l'eau étant éliminés afin d'éviter que ceux-ci ne provoquent des colmatages au sein des colonnes de distillation cyrogénique.

Les catalyseurs d'oxydation utilisés à cette fin sont généralement constitués d'un métal, tels le platine ou le palladium, déposé sur un support, telle l'alumine.

Toutefois, ce prétraitement de l'air présente plusieurs limites.

D'abord, il est connu que les catalyseurs d'oxydation sont fortement exposés à des risques d'empoisonnement conduisant à leur désactivation progressive au cours du temps due aux divers polluants contenus dans l'air à traiter, tels notamment les composés halogénés ou soufrés, et les vapeurs huileuses engendrées par la compression de l'air.

Ensuite, il est nécessaire d'associer à ce prétraitement une distillation cryogénique poussée afin de produire un fluide inerte exempt en oxygène, ce qui est réalisé en augmentant la hauteur de la ou des colonnes de distillation cryogénique et engendre donc une augmentation importante des investissements et donc du coût global du fluide inerte ainsi produit.

En outre, le post-traitement du fluide inerte produit par distillation cryogénique n'est pas non plus idéal dans la mesure où il nécessite la mise en oeuvre de dispositifs d'épuration ou épurateurs souvent onéreux et parfois mal adaptés à une épuration efficace de certaines impuretés, tel en particulier l'hydrogène, laquelle est difficile à éliminer, car représentant un temps de percée relativement court, et nécessitent donc des régénérations fréquentes et à températures élevées (de l'ordre de 200°C) du lit d'adsorbant.

Plusieurs documents de l'art antérieur décrivent de tels procédés de pré-traitement et/ou de post-traitement de l'air et/ou de post-traitement du fluide inerte produit, tel notamment les documents EP-A-0240270, EP-A-0197717, EP-A-0438282 ou EP-A-0606081.

Le but de la présente invention est donc de proposer un procédé et un dispositif permettant de produire un fluide inerte de haute pureté, tel l'azote ou l'argon, susceptibles d'être utilisé à des fins électroniques, lesquels procédé et dispositif ne présentent pas les inconvénients des dispositifs de l'art antérieur, permettent une élimination efficace, en particulier des impuretés de type hydrogène, et soient de coûts raisonnables et de mise en oeuvre aisée à l'échelle industrielle.

La présente invention concerne alors un procédé de préparation d'un gaz inerte de haute pureté à partir d'air comprenant les étapes successives de :
a) distillation cryogénique d'air comprimé,
b) récupération d'un fluide inerte impur contenant des impuretés hydrogène (H₂) et des impuretés résiduaires,
c) adsorption d'au moins une partie des impuretés résiduaires contenues dans ledit fluide inerte impur au moyen d'au moins un lit d'au moins un adsorbant,
d) récupération d'un fluide inerte intermédiaire contenant des impuretés hydrogène,
e) élimination par perméation des impuretés hydrogène contenues dans ledit fluide inerte intermédiaire,
f) récupération d'un fluide inerte de haute pureté à l'état gazeux.

Selon le cas, le procédé de l'invention peut comprendre l'une ou plusieurs des caractéristiques suivantes:
- il comporte, en outre, la récupération d'un mélange gazeux de perméation contenant ledit gaz inerte et de l'hydrogène;
- le mélange gazeux de perméation contient moins de 10% d'hydrogène et, en général, moins de 1% d'hydrogène ce qui correspond à la quasi-totalité de l'hydrogène contenu à l'origine dans le fluide inerte intermédiaire, le reste étant essentiellement ledit gaz inerte;
- le mélange gazeux de perméation est stocké;
- il comporte, en outre, une régénération d'au moins un lit d'adsorbant au moyen du mélange gazeux de perméation;
- préalablement à ladite régénération, on ajoute, le cas échéant, dans le mélange gazeux de perméation, un complément d'hydrogène, de sorte d'obtenir un mélange de régénération contenant de 1 à 5 % d'hydrogène, le reste étant essentiellement ledit gaz inerte;
- il comporte, préalablement à l'étape e), au moins une étape de chauffage et/ou vaporisation du fluide inerte contenant des impuretés hydrogène;
- il comporte, préalablement à l'étape a), au moins une étape de dessiccation et/ou décarbonatation de l'air;
- le matériau adsorbant est choisi parmi les zéolites naturelles ou synthétiques, échangées ou non-échangées ou les oxydes métalliques poreux;
- le gaz inerte est choisi parmi l'argon, l'azote.

L'invention concerne également un dispositif de préparation d'un gaz inerte de haute pureté à partir d'air ambiant comprenant :
- des moyens de compression d'air ambiant,
- des moyens de distillation cryogénique de l'air comprimé comportant au moins une colonne de distillation cryogénique,
- des moyens de récupération d'au moins un fluide inerte impur contenant des impuretés hydrogène (H₂) et des impuretés résiduaires,
- des moyens d'adsorption d'au moins une partie desdites impuretés résiduaires comprenant au moins un adsorbeur,
- des moyens de récupération d'un fluide inerte intermédiaire contenant des impuretés hydrogène,
- des moyens de perméation comprenant au moins un module de perméation dudit fluide inerte intermédiaire contenant des impuretés hydrogène,
- et des moyens de récupération d'un gaz inerte de haute pureté.

Selon le cas, le dispositif de l'invention peut comprendre l'une ou plusieurs des caractéristiques suivantes:
- les moyens de perméation comprenant plusieurs modules membranaires insérés dans une enceinte dont la température peut être régulée;
- la sortie perméat des moyens de perméation est reliée à au moins une machine choisie parmi les pompes à vide et les compresseurs. Ainsi, il est possible de soumettre le côté perméat des modules membranaires à un vide partiel;
- les moyens d'adsorption comprennent au moins deux adsorbeurs fonctionnant en parallèle;
- il comporte, en outre, des moyens de récupération d'un mélange gazeux de perméation contenant ou formé de la fraction permée dudit gaz inerte et la quasi-totalité de l'hydrogène contenu au départ dans le fluide inerte intermédiaire. La concentration en hydrogène dans le mélange gazeux de perméation est inférieure à 10% et, en général, inférieure ou égale à 1% environ.

L'invention concerne, en outre, un mélange gazeux de régénération comportant de 1 à 5% hydrogène et un gaz inerte, ledit mélange gazeux étant susceptible d'être obtenu par le procédé sus mentionné.

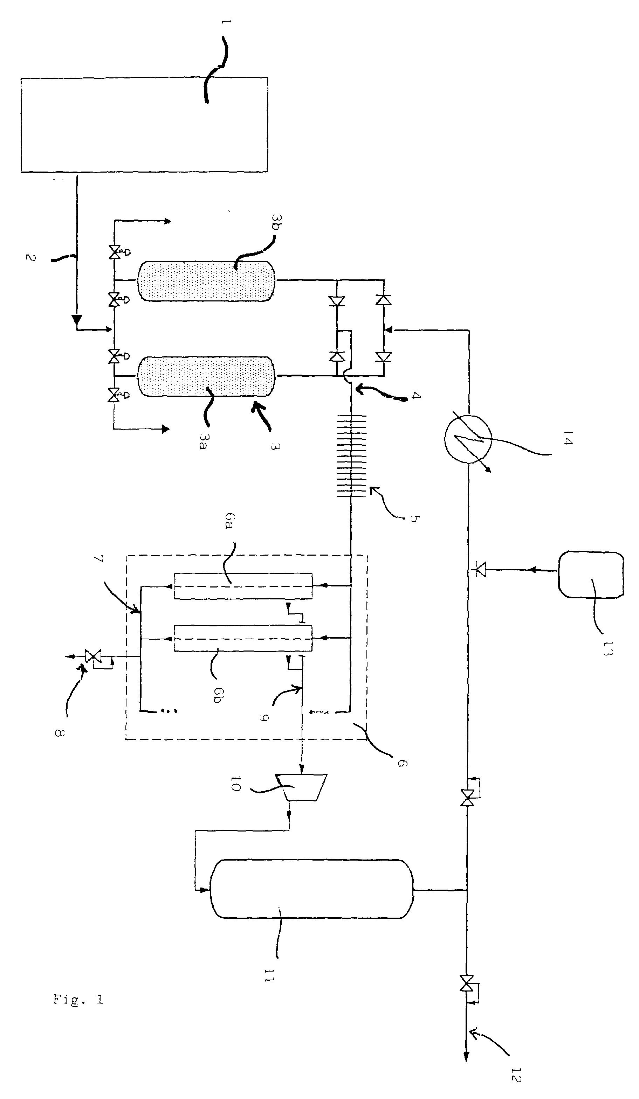

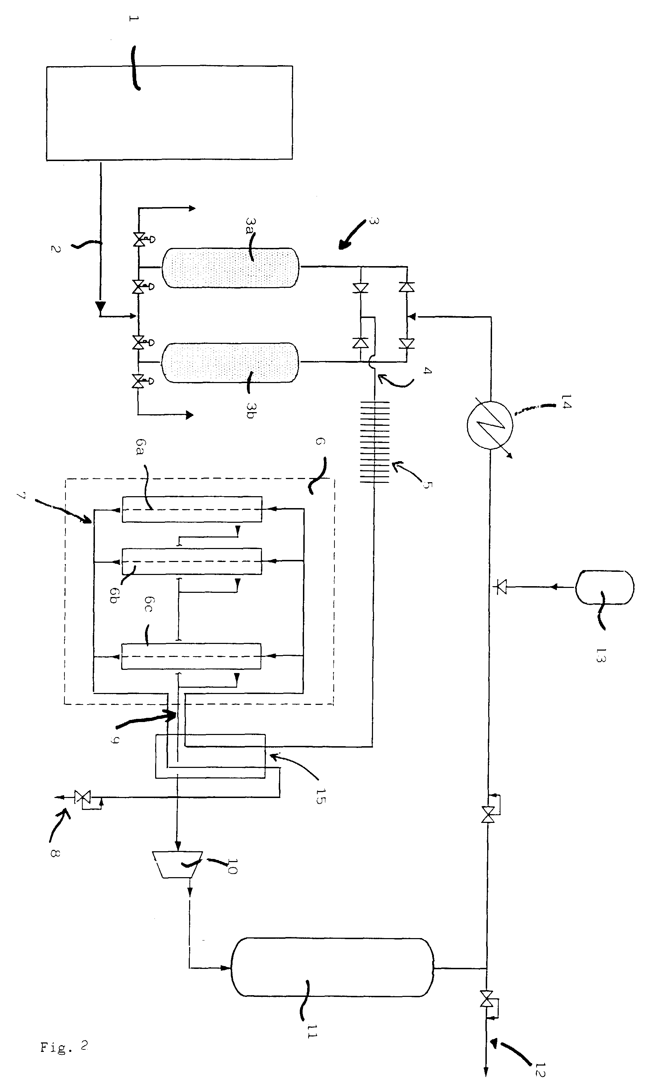

L'invention va maintenant être décrite plus en détail à l'aide de deux modes de réalisation donnés à titre illustratif, mais non limitatif, et en référence aux figures 1 et 2 annexées.

La figure 1 représente un premier mode de réalisation d'un dispositif de production d'un fluide inerte ultra-pur à partir d'air ambiant, le fluide inerte étant, dans ce cas, de l'azote.

De l'air ambiant est comprimé par des moyens de compression (non représentés), puis envoyé vers une zone de pré-traitrement (non représenté), dans laquelle s'effectue une dessiccation et une décarbonatation de l'air afin d'en éliminer les contaminants de types CO₂ et H₂O.

L'air comprimé, déssiccé et décarbonaté est ensuite envoyé vers une unité de séparation d'air 1 comprenant un ou plusieurs échangeurs thermiques et une ou plusieurs colonnes de distillation cryogénique, dans laquelle s'effectue son fractionnement.

En sortie d'unité de séparation d'air, on récupère un fluide inerte impur, ici de l'azote, à l'état liquide ou gazeux.

L'azote cryogénique impur ainsi produit contient de quelques ppm (partie par million en volume) à quelques dizaines de ppm d'impuretés.

Il est à souligner que le fait de pouvoir se contenter de produire de l'azote impur est très avantageux économiquement étant donné que ceci permet de réduire considérablement la hauteur de garnissage à l'intérieur de la ou des colonnes de distillation cryogénique par rapport, par exemple, à une production d'azote ayant une pureté supérieure.

L'azote impur ainsi produit contient, en général, des impuretés résiduaires de types oxygène (O₂) et monoxyde de carbone (CO) et des impuretés hydrogène (H₂), lesquelles étaient initialement présentes dans l'air ambiant.

L'azote impur ainsi produit va alors être soumis à un post-traitement par adsorption dans une zone d'épuration 3 comportant deux adsorbeurs 3a et 3b fonctionnant en parallèle, c'est-à-dire que lorsque l'adsorbeur 3a est en phase d'épuration, l'adsorbeur 3b est en phase de régénération, et inversement.

Chacun de ces adsorbeurs 3a et 3b contient un ou plusieurs lits d'un adsorbant permettant l'élimination des impuretés résiduaires contenues dans l'azote impur, en particulier du monoxyde de carbone (CO) et de l'oxygène (O₂), de sorte de récupérer en sortie de ladite zone de purification 3, de l'azote de pureté intermédiaire ou azote "intermédiaire", c'est-à-dire lequel contient essentiellement des impuretés hydrogène (H₂).

L'élimination des impuretés CO et O₂ peut être réalisée à l'état liquide et/ou gazeux, par exemple, au moyen d'un adsorbant de type oxyde métallique poreux, telle une hopcalite activée, ou tout autre adsorbant adéquat.

L'azote intermédiaire contenant des impuretés hydrogène est récupéré en sortie de la zone de purification 3 par des moyens de récupération 4, éventuellement réchauffé et/ou vaporisé dans un ou plusieurs échangeurs thermiques 5 avant d'être introduit dans une zone de perméation 6 comportant au moins un et, de préférence, plusieurs modules de perméation 6a et 6b, tels des modules membranaires insérés dans une enceinte dont la température est régulée, par exemple, maintenue à une température de 5°C à 60°C, de préférence de l'ordre de 40°C.

En sortie retentat, les moyens de récupération 7 acheminent un flux d'azote de haute pureté, c'est-à-dire contenant moins de 1 ppb d'impuretés, jusqu'à un site 8 utilisateur ou de stockage.

En sortie perméat 9, on récupère, en outre, un flux de perméation constitué d'un mélange d'azote et hydrogène, contenant en général moins de 1% hydrogène, le reste étant essentiellement de l'azote.

Ce flux de perméation contenant de l'azote et de hydrogène est subséquemment comprimé par une machine 10 et stocké dans une ou plusieurs capacités tampon 11 en vu d'une utilisation ultérieure.

En particulier, ce flux de perméation peut être utilisé pour régénérer, c'est-à-dire réactiver, les lits d'adsorbants contenus dans les adsorbeurs 3a et 3b.

Dans ce cas, la régénération de l'adsorbant s'effectue, de préférence, à chaud, c'est-à-dire à une température de l'ordre de 200 à 250°, en présence d'un composé réducteur (hydrogène) à une teneur de 1 à 5%.

Toutefois, dans certains cas, il est nécessaire d'ajouter un complément hydrogène au flux de perméation, de sorte d'obtenir un flux de régénération ayant une teneur en hydrogène dans la gamme précitée; une alimentation 13 en hydrogène d'appoint étant prévu à cet effet.

Préalablement à son introduction dans l'adsorbeur 3a ou 3b, le flux de régénération est porté à la température de régénération par passage dans un réchauffeur 14.

Le flux de perméation, stocké dans la capacité 11, peut également, le cas échéant, être envoyé vers un site utilisateur 12 où il y sera utilisé tel quel, c'est-à-dire en tant qu'azote de service ne nécessitant pas une haute pureté, par exemple en tant que gaz de purge, de balayage, d'inertage ou de séchage.

De préférence, la perméation est effectuée à une température de l'ordre de 40°C et à une pression de 5 à 10 bars en entrée de modules.

La pression du perméat peut être, selon le cas, la pression atmosphérique ou un vide partiel (0,2 bars absolus par exemple); dans ce cas, la machine 10 est alors une pompe à vide ou une pompe à vide alimentant un compresseur placé en aval.

La figure 2 est analogue à la figure 1 et les parties communes portent les mêmes références.

Toutefois, la zone de perméation 6 représentée sur la figure 2 comporte, dans ce cas, non plus 2, mais 3 modules de perméation agencée en parallèle, ce qui permet d'augmenter le débit de production.

En outre, la figure 2 se différencie de la figure 1 par la présence d'un échangeur de chaleur 15, lequel permet d'assurer des transferts thermiques entre le flux gazeux de pureté intermédiaire avant son entrée dans la zone de perméation 6, le flux d'azote de haute pureté récupéré coté retentat et le flux de perméation (mélange azote/hydrogène) sortant de ladite zone de perméation 6.

Cet agencement particulier présente l'avantage de permettre de minimiser la consommation énergétique du système de régulation de température.

Bien que les figures 1 et 2 représentent le dispositif de production d'azote de haute pureté, ces dispositifs peuvent être également utilisés pour la production d'autres gaz inertes de haute pureté tel en particulier l'argon.

La mise en oeuvre du procédé de l'invention a permis d'obtenir les résultats consignés dans le tableau suivant.

**TABLEAU**

| ESSAI N° | 1 | 2 | 3 | 4 |
|---|---|---|---|---|
| Pression en entrée de zone de perméation (bar absolu) | 7,38 | 7,35 | 7,36 | 8,25 |
| Débit en entrée de zone de perméation (Nm³.h⁻¹) | 5,02 | 6,00 | 6,00 | 5,02 |
| Débit perméat Nm³(N₂/H₂).h⁻¹ | 2,09 | 1,57 | 1,24 | 1,51 |
| Débit rétentat Nm³(N₂).h⁻¹ | 2,93 | 4,43 | 4,76 | 3,51 |
| Teneur H2 en entrée de zone perméation (ppb) | 900 | 900 | 200 | 4 000 |
| Teneur H2 en sortie côté rétentat (ppb) | N.D. | N.D. | N.D. | N.D. |
| Température de perméation (°C) | 50 | 24 | 25 | 40 |
| Pression de perméation (bar abs.) | 0,65 | 0,80 | 0,40 | P.A. |
| N.D.= non détecté par l'analyseur commercialisé par la Société TRACE ANALYTICAL sous la référence RGA3. | | | | |
| P.A.= pression atmosphérique. | | | | |

Il ressort du tableau précédent que le procédé de l'invention permet de produire de l'azote ultra pur (moins de 5 ppb de H₂) à partir d'azote impur contenant jusqu'à 4 000 ppb d'impuretés H₂ et ce, pour différentes conditions de débit, de pression et de température.

Les procédé et dispositif de l'invention permettent de par une combinaison judicieuse de trois techniques différentes de séparation, à savoir la distillation cryogénique, l'épuration par adsorption et la séparation par perméation, de produire, d'une part, des fluides inertes de très haute pureté pouvant être utilisés notamment dans le domaine de l'électronique, et d'autre part, de valoriser une partie des gaz déchets ou gaz de perméation qui sont habituellement rejetés à l'atmosphère, en les récupérant et les utilisant à des fins diverses, en particulier pour régénérer les adsorbants utilisés durant la phase d'épuration par adsorption.

## Revendications

1. Procédé de préparation d'un gaz inerte de haute pureté à partir d'air comprenant les étapes successives de :
a) distillation cryogénique d'air comprimé,
b) récupération d'un fluide inerte impur contenant des impuretés hydrogène (H₂) et des impuretés résiduaires,
c) adsorption d'au moins une partie des impuretés résiduaires contenues dans ledit fluide inerte impur au moyen d'au moins un lit d'au moins un adsorbant,
d) récupération d'un fluide inerte intermédiaire contenant des impuretés hydrogène,
e) élimination par perméation des impuretés hydrogène contenues dans ledit fluide inerte intermédiaire,
f) récupération d'un fluide inerte de haute pureté à l'état gazeux.

2. Procédé selon la revendication 1, caractérisé en ce qu'il comporte, en outre, la récupération d'un mélange gazeux de perméation contenant ledit gaz inerte et de l'hydrogène.

3. Procédé selon la revendication 2, caractérisé en ce que le mélange gazeux de perméation contient moins de 10% d'hydrogène, et, de préférence, moins d'environ 1% d'hydrogène, le reste étant essentiellement ledit gaz inerte.

4. Procédé selon l'une des revendications 2 ou 3, caractérisé en ce que le mélange gazeux de perméation est stocké.

5. Procédé selon l'une des revendications 1 à 4, caractérisé en ce qu'il comporte, en outre, une régénération d'au moins un lit d'adsorbant au moyen du mélange gazeux de perméation.

6. Procédé selon la revendication 5, caractérisé en ce que, préalablement à ladite régénération, on ajoute, dans le mélange gazeux de perméation, un complément d'hydrogène, de sorte d'obtenir un mélange de régénération contenant de 1 à 5 % d'hydrogène, le reste étant essentiellement ledit gaz inerte.

7. Procédé selon la revendication 1, caractérisé en ce qu'il comporte, préalablement à l'étape e), au moins une étape de chauffage et/ou vaporisation du fluide inerte contenant des impuretés hydrogène.

8. Procédé selon la revendication 1, caractérisé en ce qu'il comporte, préalablement à l'étape a), au moins une étape de dessiccation et/ou décarbonatation de l'air.

9. Procédé selon la revendication 1, caractérisé en ce que le matériau adsorbant est choisi parmi les zéolites naturelles ou synthétiques, échangées ou non-échangées ou les oxydes métalliques poreux.

10. Procédé selon la revendication 1, caractérisé en ce que le gaz inerte est l'argon ou l'azote.

11. Dispositif de préparation d'un gaz inerte de haute pureté à partir d'air ambiant comprenant :
- des moyens de compression d'air ambiant,
- des moyens de distillation cryogénique (1) de l'air comprimé comportant au moins une colonne de distillation cryogénique,
- des moyens de récupération (1, 2) d'au moins un fluide inerte impur contenant des impuretés hydrogène (H₂) et des impuretés résiduaires,
- des moyens d'adsorption (3, 3a, 3b) d'au moins une partie desdites impuretés résiduaires comprenant au moins un adsorbeur (3a, 3b),
- des moyens de récupération (4) d'un fluide inerte intermédiaire contenant des impuretés hydrogène,
- des moyens de perméation (6, 6a, 6b, 6c) comprenant au moins un module de perméation dudit fluide inerte intermédiaire contenant des impuretés hydrogène,
- et des moyens de récupération (7) d'un gaz inerte de haute pureté.

12. Dispositif selon la revendication 11, caractérisé en ce que les moyens de perméation (6, 6a, 6b, 6c) comprenant plusieurs modules membranaires (6a, 6b, 6c) insérés dans une enceinte (6) dont la température est régulée.

13. Dispositif selon la revendication 11, caractérisé en ce que les moyens d'adsorption (3, 3a, 3b) comprennent au moins deux adsorbeurs (3a, 3b) fonctionnant en parallèle.

14. Dispositif selon la revendication 11, caractérisé en ce qu'il comporte, en outre, des moyens de récupération (9, 11) d'un mélange gazeux de perméation contenant ledit gaz inerte et moins de 10% d'hydrogène.

15. Dispositif selon l'une des revendications 11 ou 12, caractérisé en ce que la sortie perméat des moyens de perméation (6, 6a, 6b, 6c) est reliée à au moins une machine (10) choisie parmi les pompes à vide et les compresseurs.

16. Mélange gazeux de régénération comportant de 1 à 5 % d'hydrogène et un gaz inerte susceptible d'être obtenu par le procédé selon l'une des revendications 1 à 10.
